# EUROPEAN PATENT APPLICATION

(11) **EP 4 321 599 A1**
(43) Date of publication of application: **14.02.2024**
(21) Application number: 22196418.2
(22) Date of filing: 19.09.2022
(51) Int. Cl.: C10G 3/00, C10G 45/64, B01J 29/74

(54) **HYDROCARBON FLUIDS**

(30) Priority: 11.08.2022 US 202263371088 P
(71) Applicant: ExxonMobil Chemical Patents Inc., Baytown, TX 77520-2101 (US)
(72) Inventor: LOTZ, Monica D., Houston, TX 77018 (US); CARRETTIN, Silvio, 1950 Kraainem (BE); THOMAS II, Craig D., Houston, TX 77019 (US); HU, Nan, Houston, TX 77059 (US); CADY, Samuel J, Morristown NJ 07960 (US); XU, Xiaocchun, Basking Ridge NJ 07920 (US)
(74) Representative: ExxonMobil Chemical Europe Inc.

(57) **Abstract**

Described herein are hydrocarbon fluids having a low pour point and high flash point, as well as methods for the manufacture of such fluids. The hydrocarbon fluids can have an isoparaffin content of at least 90 wt%; a flash point of at least 125°C; and a pour point of -65°C or less.

## Description

### FIELD OF THE INVENTION

Described herein are hydrocarbon fluids having a low pour point and high flash point, as well as methods for the manufacture of such fluids.

### BACKGROUND OF THE INVENTION

Low temperature fluidity can be important in fluids and lubricant applications such as immersion cooling, transformer oils and battery cooling for electric vehicles. A relevant indicator for low temperature fluidity is the fluid's pour point. However, fluids having a lower pour point generally also have a lower flash point.

There also is a need for bio-sourced fluids that have enhanced low temperature performance, as there is increasing demand for more sustainable products. Bio-derived hydrocarbon feedstocks from oilseeds are inherently linear and therefore generally have poor low temperature fluidity. While the low temperature fluidity can be improved via hydrodeoxygenation and isomerization of the feed, this typically also lowers the flash point.

There is a need for hydrocarbon fluids having a beneficial combination of low pour point and high flash point, which can be made from bio-derived feedstocks.

### SUMMARY OF THE INVENTION

Described herein are hydrocarbon fluids having a low pour point and high flash point. In particular embodiments, provided herein is a hydrocarbon fluid having an isoparaffin content of at least 90 wt% (percent by weight); a flash point of at least 125°C; and a pour point of -65°C or lower.

Further described herein are hydrocarbon fluids having a high degree of branching. In particular embodiments, provided herein is a hydrocarbon fluid having an isoparaffin content of at least 90 wt% and a degree of branching of at least 1.60.

Further described herein is a method suitable for producing the hydrocarbon fluids described herein. In particular, described is a method for the manufacture of a hydrocarbon fluid, comprising:
- providing a hydrocarbon feed obtainable via the hydrodeoxygenation of a bio-derived feedstock selected from triglycerides, monoglycerides, diglycerides, fatty acid alkyl esters, free fatty acids, or combinations thereof;
- contacting said hydrocarbon feed with an isomerization/dewaxing catalyst comprising a 10-member ring, one-dimensional zeotype framework structure and a metal selected from Pt, Pd, or a combination thereof, under effective isomerization/dewaxing conditions, thereby obtaining an isoparaffinic fluid; and
- optionally, fractionating said isoparaffinic fluid.

### DETAILED DESCRIPTION

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

All numerical values within the detailed description herein are modified by "about" the indicated value, and take into account experimental error and variations that would be expected by a person having ordinary skill in the art.

The following terms are provided solely to aid in the understanding of the invention.

The term "alkene" or "olefin" as used herein refers to a hydrocarbon containing a carbon-carbon double bond. Alkenes/olefins may be linear or branched, unless specified otherwise.

The term "alkyl" or "alkyl group" as used herein interchangeably refers to a saturated hydrocarbyl group consisting of carbon and hydrogen atoms. An alkyl group can be linear or branched, and does not include ring structures, unless specifically mentioned otherwise.

The term "aryl" or "aryl group" as used herein interchangeably refers to a hydrocarbyl group comprising an aromatic ring structure therein.

In this discussion, a "Cx" hydrocarbon refers to a hydrocarbon compound that includes "x" number of carbons in the compound. A stream containing "Cx-Cy" hydrocarbons refers to a stream composed of one or more hydrocarbon compounds that includes at least "x" carbons and no more than "y" carbons in the compound. It is noted that a stream containing "Cx-Cy" hydrocarbons may also include other types of hydrocarbons, unless otherwise specified.

As used herein, the term "configured" means that the element, component, or other subject matter is designed and/or intended to perform a given function. Thus, the use of the term "configured" should not be construed to mean that a given element, component, or its subject matter is simply "capable of' performing a given function but that the element, component, and/or other subject matter is specifically selected, created, implemented, utilized, and/or designed for the purpose of performing the function.

The term "catalytic dewaxing" (or simply "dewaxing") refers to the conversion of at least some of the normal paraffin content of a feedstock. This may be accomplished by isomerization of n-paraffins and/or cracking. The primary purpose of dewaxing is to reduce the cloud point by separating or converting hydrocarbons within the feedstock that readily solidify in petroleum fractions, thus ensuring that the feedstock will remain fluid down to the lowest expected temperature of use. In operation, dewaxing is required when highly paraffinic oils are to be used in products (such as diesel fuels) that need to flow at low temperatures. These oils contain high-molecular-weight straight-chain and slightly-branched paraffins, which cause the oils to have high cloud points. In order to obtain adequately low cloud points, these waxes must be wholly or partly removed or converted.

As used herein, the term "fluid" refers to gases, liquids, and combinations of gases and liquids, as well as to combinations of gases and solids, and combinations of liquids and solids.

The term "gas" is used interchangeably with "vapor," and is defined as a substance or mixture of substances in the gaseous state as distinguished from the liquid or solid state. Likewise, the term "liquid" means a substance or mixture of substances in the liquid state as distinguished from the gas or solid state.

As used herein, the "Liquid Hourly Space Velocity (LHSV)" for a feed or portion of a feed to a reactor is defined as the volume of feed per hour relative to the volume of catalyst in the reactor.

The term "pressure" refers to a force acting on a unit area. A pressure value is typically expressed as a number of pounds per square inch (psi) or kPa, wherein 1 psi is equal to 6.89476 kPa.

In this discussion, "Tx" refers to the temperature at which a weight fraction "x" of a sample can be boiled or distilled. For example, if 40 wt% of a sample has a boiling point of 350 °F or less, the sample can be described as having a T40 distillation point of 350 °F. T0 is also referred to herein as "Initial Boiling Point" (IBP) and T100 as "Final Boiling Point" (FBP). In this discussion, boiling points are determined according to ASTM D86, unless specified otherwise.

As used herein, the term "ZSM" refers to Zeolite Socony Mobil, which includes a number of zeolites, such as ZSM-48, that may be used as catalysts in oil refining. This type of zeolite is a member of a family of microporous solids known as "molecular sieves," which have pore diameters that are similar in size to relatively small molecules and, thus, allow relatively small molecules to adsorb or pass through while relatively large molecules cannot.

### Hydrocarbon fluids

Provided herein is a hydrocarbon fluid having an isoparaffin content of at least 90 wt%, a flash point of at least 125°C; and a pour point of -65°C or lower. Also provided herein is a hydrocarbon fluid having an isoparaffin content of at least 90 wt%, a degree of branching of at least 1.60. The below description can apply to both hydrocarbon fluids. The hydrocarbon fluids may be prepared from a (partially) bio-derived feedstock as further described herein.

The hydrocarbon fluids described herein are highly isoparaffinic and have an isoparaffin content of at least 90 wt%. Isoparaffins (i.e. branched alkanes) have better cold flow properties compared to n-paraffins (i.e. normal or linear alkanes). In preferred embodiments, the hydrocarbon fluids may have an isoparaffin content of at least 95 wt%, at least 98 wt%, at least 99 wt% or even at least 99.2 wt%. Additionally or alternatively, the fluid may have an n-paraffin content of 2 wt% or less, 1 wt% or less, or even 0.5 wt% or less. The isoparaffin and n-paraffin content can be determined according to ASTM D2786.

The hydrocarbon fluids described herein can have a low pour point. More particularly, the fluids can have a pour point of -65°C or lower. In particular embodiments, the fluids can have a pour point of -68°C or lower, -70°C or lower, or even -72°C or lower. The pour point can be determined according to ASTM D5950.

The hydrocarbon fluids described herein can have a flash point of at least 125°C. In particular embodiments, the fluids may have a flash point of 126°C or more, or 127°C or more. The flash point can be determined according to ASTM D7094.

The hydrocarbon fluids described herein may be highly branched, and may have a degree of branching of at least 1.60, at least 1.70, or at least 1.75. The high degree of branching improves the cold flow properties of the fluids. The term "degree of branching" or "D" as used herein refers to the average number of branches per molecule in the hydrocarbon fluid, and can be defined as D = (my + nz + etc)/(x + y + z + etc), wherein x is the molar proportion of unbranched species; y is the molar proportion of species having m branches; z is the molar proportion of species having n branches, etc. To determine the degree of branching, gas chromatographic and nuclear magnetic resonance methods can be employed. More particularly, the paraffin, isoparaffin, naphthene, and aromatics content of the hydrocarbon fluid can first be determined via gas chromatography (GC), for example in accordance with ASTM D8071. The amount of branched molecules can then be determined via ¹H NMR analysis.

The skilled person will understand that the flash point of a hydrocarbon fluid typically correlates with the fluid's boiling point. In preferred embodiments, the hydrocarbon fluids have an IBP of at least 220°C and a FBP of at most 320°C. In further embodiments, the hydrocarbon fluids may have an IBP of at least 250°C. Additionally or alternatively, the FBP may be at most 315°C. The IBP and FBP can be determined according to ASTM D86.

The hydrocarbon fluids preferably have a narrow boiling range, which is defined herein as the difference between FBP and IBP (i.e. FBP - IBP). In particular embodiments, the fluids may have a boiling range of 60°C or less, or 50°C or less. Typically, the fluids will have a boiling range of at least 20°C, for example 30°C or more.

The distillation range of the fluids may also be determined according to ASTM D2887. Using this method, the fluid may have an IBP of at least 230°C. Preferably, the IBP according to ASTM D2887 is at least 250°C, at least 260°C, or at least 270°C. The T99.5 according to ASTM D2887 may be 330°C or less, 325°C or less, or 320°C or less. In particular embodiments, the difference between T99.5 and the IBP determined according to ASTM D2887 may be 50°C or less, 45°C or less, or 40°C or less. In addition, the difference between T99.5 and the IBP determined according to ASTM D2887 can be 20°C or more, for example 30°C or more.

Typically, the hydrocarbon fluids will mainly comprise C₁₇ and C₁₈ hydrocarbons C₁₇ and C₁₈ hydrocarbons. Such hydrocarbons will usually have a boiling point within the ranges specified above. In preferred embodiments, the hydrocarbon fluids may comprise at least 90 wt% C₁₇ and C₁₈ hydrocarbons, preferably at least 95 wt% C₁₇ and C₁₈ hydrocarbons. Additionally or alternatively, the hydrocarbon fluids may comprise 60 wt% or more C₁₈ hydrocarbons, 75 wt% or more C₁₈ hydrocarbons, or even 85 wt% or more C₁₈ hydrocarbons. The C₁₇ and C₁₈ hydrocarbon content can be determined via gas chromatography with flame ionization detector (GC-FID).

In preferred embodiments, the hydrocarbon fluids consists primarily of paraffins, i.e. isoparaffins, n-paraffins, and/or cycloparaffins. More particularly, the total paraffin content may be at least 98 wt%, at least 99 wt%, or at least 99.5 wt%. The total paraffin content can be determined according to ASTM D2786.

The hydrocarbon fluids described herein typically have a low aromatic content, for example 1 wt% or less, 0.5 wt% or less, or even 0.1 wt% or less. The aromatic content can be determined according to ASTM D7419.

The hydrocarbon fluids described herein typically have a low olefin content, for example 0.5 wt% or less, 0.1 wt% or less, or even 0.05 wt% or less. The olefin content may be determined using gas chromatography with vacuum ultraviolet absorption spectroscopy detection according to ASTM D8071.

The hydrocarbon fluids described herein may have a viscosity at 40°C of more than 1 cSt and less than 8 cSt, for example between 2 cSt and 5 cSt. The viscosity can be measured according to ASTM D7042.

The hydrocarbon fluids described herein may be prepared from a bio-derived feedstock as described further below. Accordingly, in particular embodiments, the hydrocarbon fluids may have a biocarbon content of 90% or more, 95% or more, or even 99% or more (% by weight). The biocarbon content can be determined according to ASTM D 6866- 12, method B (ASTM D 6866-06) and ASTM D 7026 (ASTM D 7026-04). The second standard mentions the first in its first paragraph. Furthermore, the hydrocarbon fluids described herein may have improved biodegradability properties compared to similar petroleum-based fluids.

The hydrocarbon fluids described herein may be used for various applications such as manufacturing process solvent, lubricants, fuels, polymer processing, metal working, cleaning agents, coatings formulations, water treatment, binders and release agents, oil field drilling and production operations, consumer product solvent or carrier fluid, dielectric fluids, and cooling fluids (e.g. immersion battery cooling).

In particular embodiments, the hydrocarbon fluids described herein may be blended with a second hydrocarbon fluid (e.g. a petroleum-based hydrocarbon fluid). The addition of the hydrocarbon fluids described herein to such second hydrocarbon fluid may improve certain properties of the second hydrocarbon fluid, for example it may reduce the pour point and/or increase the flash point of the second hydrocarbon fluid.

In particular embodiments, the hydrocarbon fluids may have the following properties:
- a flash point of at least 125°C;
- a pour point of -65°C or lower;
- an isoparaffin content of at least 99 wt%;
- a n-paraffin content of 0.5 wt% or lower;
- an IBP of at least 250°C (ASTM D86);
- a FBP of 320°C or less (ASTM D86); and
- optionally, a boiling range (FBP-IBP) between 20°C and 60°C (ASTM D86).

Additionally or alternatively, the hydrocarbon fluids may have the following properties:
- a flash point of at least 125°C;
- a pour point of -65°C or lower;
- an isoparaffin content of at least 99 wt%;
- a n-paraffin content of 0.5 wt% or lower;
- an IBP of at least 260°C (ASTM D2887);
- a FBP of 330°C or less (ASTM D2887); and
- optionally, a boiling range (FBP-IBP) between 20°C and 50°C (ASTM D2887).

### Method for producing hydrocarbon fluids

The hydrocarbon fluids described herein may be produced from a (partially) bio-derived feedstock via a two-stage process. The first stage is a hydrotreatment stage in which a bio-derived feedstock is hydrotreated within a hydrotreatment reactor for the removal of oxygen and the saturation of double bonds. This step yields an intermediate product consisting primarily n-paraffins, which generally have poor cold flow properties. The intermediate product or a portion thereof is sent to the second stage, which is a catalytic dewaxing stage. The two-stage process will be described further below.

The hydrocarbon fluids described herein may be produced from a bio-derived feedstock, where the term "bio-derived feedstock" refers to a hydrocarbon feedstock derived from a biological raw material source, such as vegetable, animal, fish, and/or algae. For example, suitable feedstocks include diglycerides, monoglycerides, triglycerides, fatty acid methyl esters (FAME), free fatty acids, and the like, derived from plant oils, animal fats, or algae oils. A feedstock that has been pretreated to remove metals, gums, and other contaminants (such as refined, bleached, and deodorized (RBD) grade vegetable oil) is preferred.

As used herein, the term "vegetable oil" (or "vegetable fat") refers generally to any plant-based material and can include fats/oils derived from plant sources, such as rapeseed. Generally, the biological sources used for the bio-derived feedstock can include vegetable oils/fats, animal oils/fats, fish oils, pyrolysis oils, and/or algae lipids/oils, as well as any components of such biological sources. In some embodiments, the biological sources specifically include one or more types of lipid compounds, where the term "lipid compound" generally refers to a biological compound that is insoluble in water, but soluble in nonpolar (or fat) solvents. Non-limiting examples of such solvents include alcohols, ethers, chloroform, alkyl acetates, benzene, and combinations thereof.

Major classes of lipids include, but are not necessarily limited to, fatty acids, glycerol-derived lipids (including fats, oils, and phospholipids), sphingosine-derived lipids (including ceramides, cerebrosides, gangliosides, and sphingomyelins), steroids and their derivatives, terpenes and their derivatives, fat-soluble vitamins, certain aromatic compounds, and long-chain alcohols and waxes. In living organisms, lipids generally serve as the basis for cell membranes and as a form of fuel storage. Lipids can also be found conjugated with proteins or carbohydrates, such as in the form of lipoproteins and lipopolysaccharides.

Examples of vegetable oils that can be used according to embodiments described herein include, but are not limited to, rapeseed (canola) oil, soybean oil, coconut oil, sunflower oil, palm oil, palm kernel oil, peanut oil, linseed oil, tall oil, com oil, castor oil, jatropha oil, jojoba oil, olive oil, flaxseed oil, camelina oil, safflower oil, babassu oil, tallow oil, and rice bran oil. According to embodiments described herein, vegetable oils can also include processed vegetable oil material. Non-limiting examples of processed vegetable oil material include fatty acids and fatty acid alkyl esters. Alkyl esters typically include C₁-C₅ alkyl esters. One or more of methyl, ethyl, and propyl esters are preferred.

Moreover, according to embodiments described herein, the bio-derived feedstock can include any feedstock that consists primarily of triglycerides and free fatty acids (FFAs), e.g. at least 90 wt% of the feedstock consists of triglycerides and FFAs. The triglycerides and FFAs preferably primarily contain aliphatic hydrocarbon chains in their structure having from 14 to 20 carbons, or preferably from 16 to 18 carbons. Types of triglycerides can be determined according to their fatty acid constituents. The fatty acid constituents can be readily determined using Gas Chromatography (GC) analysis. This analysis involves extracting the fat or oil, saponifying (hydrolyzing) the fat or oil, preparing an alkyl (e.g., methyl) ester of the saponified fat or oil, and determining the type of (methyl) ester using GC analysis. In preferred embodiments, a majority (i.e., greater than 50%) of the triglyceride present in the lipid material can consist of C₁₈ fatty acid constituents, based on the total triglyceride present in the lipid material.

Furthermore, a triglyceride is a molecule having a structure substantially identical to the reaction product of glycerol and three fatty acids. Thus, although a triglyceride is described herein as consisting of fatty acids, it should be understood that the fatty acid component does not necessarily contain a carboxylic acid hydrogen. In one embodiment, a majority of triglycerides present in the biocomponent feed can mainly consist of C₁₈ fatty acid constituents, more particularly the biocomponent feed may contain at least 50 wt% of C₁₈ fatty acid constituents based on the total triglyceride content. Other types of feeds that are derived from biological raw material components can include fatty acid esters, such as fatty acid alkyl esters (e.g., FAME and/or FAEE).

In the preparation of the hydrocarbon fluids described herein, the feedstock may undergo a hydrotreatment process prior to undergoing a dewaxing process. The hydrotreatment process can remove heteroatoms, such as oxygen, sulfur, and nitrogen, from the feedstock. The hydrotreatment process can also be used to saturate olefins. This may be accomplished using any suitable type of reactor arranged in any suitable configuration. For example, in some embodiments, the hydrotreatment reactor is an adiabatic fixed-bed reactor.

The hydrotreatment process is typically performed using a hydrotreatment catalyst. Suitable catalysts are known in the art and include catalysts containing at least one of Group VIB and/or Group VIII metals, optionally on a support such as alumina or silica. Examples include, but are not limited to, NiMo, CoMo, and NiW supported catalysts. In particular embodiments, a combination of a NiMo and Mo supported catalyst can be used. It is believed that such combination is particularly selective for hydrodeoxygenation of C₁₈ fatty acid constituents wherein the oxygen is removed in the form of H₂O. Preferred catalysts include NiMo and Mo on alumina.

The skilled person is able to select effective hydrotreatment conditions without undue burden. Suitable hydrotreatment conditions include a total pressure of about 200 psig to about 5,000 psig, a weighted average bed temperature (WABT) of about 260 °C to about 400 °C, a hydrogen-rich treat gas rate of about 34 Nm³/m³) to about 200 Nm³/m³, and a liquid hourly space velocity (LHSV) of about 0.1 hr⁻¹ to about 10.0 hr⁻¹.

Preferably, the oxygen content of the resulting hydrotreated feedstock is less than about 0.4 wt%, preferably, less than about 0.1 wt%, or even less than 0.01 wt%, to allow for optimal catalytic dewaxing activity. The oxygen content of the resulting hydrotreated feedstock may be greater than about 10 parts per million (ppm). Without being bound by any particular theory, it is believed that residual oxygenates in the hydrotreated feedstock convert to H₂O and CO during the dewaxing process, thus inhibiting the isomerization activity of the isomerization/dewaxing catalyst.

In particular embodiments, the hydrotreatment conditions are selected such that the hydrotreatment process reduces the sulfur content to less than 50 wppm, less than about, less than about 20 wppm, or less than about 10 wppm. The sulfur content may be determined via Ultraviolet Fluorescence (UV-F) according to ASTM D5453.

Because the hydrotreatment process is performed prior to the dewaxing process, a separation device can be used to separate out impurities from the hydrotreated feedstock prior to passing the hydrotreated feedstock to the isomerization/dewaxing reactor. In particular, the separation process minimizes the amount of H₂O and CO that is slipped into the isomerization/dewaxing reactor by separating the gas and liquid phases within the hydrotreated feedstock. While an interstage stripper is preferred for this purpose, any suitable separation device can be used, such as, for example, any suitable type of separator or fractionator that is configured to separate gas-phase products from liquid-phase products.

In particular embodiments, the gas phase exiting the separation device may be recycled and combined with the hydrogen-rich treat gas that is fed into the hydrotreatment reactor. Additionally or alternatively, a portion of the liquid phase exiting the separate device may be recycled back into the hydrotreatment reactor to provide improved heat release control for the hydrotreatment reactor.

In the process for producing the hydrocarbon fluids described herein, at least a portion of the hydrotreated feedstock is subject to an isomerization/dewaxing step, typically using a zeolite isomerization/dewaxing catalyst.

Preferably, the catalyst is based on the zeolite ZSM-48. ZSM-48 is a 10-member ring, one-dimensional zeotype of the MRE framework type. ZSM-48 based catalysts have a high selectivity for isomerization of paraffinic feeds relative to cracking, and are able to produce multi-branch isomers. Thus, a ZSM-48 based catalyst can provide substantially complete isomerization of a paraffinic feed (such as a hydrotreated bio-derived feed) while reducing or minimizing cracking of the paraffinic carbon chains. Without wishing to be bound by theory, the present inventors further believe that this catalyst introduces a unique branching structure which can lead to hydrocarbon fluids having a beneficial combination of low pour point and high flash point.

In some embodiments, the catalyst can consist essentially of ZSM-48, any optional binder, and a hydrogenation metal, so that less than 1.0 wt% or less of the catalyst (relative to the weight of the catalyst) corresponds to a zeotype structure different from an MRE framework structure, or less than 0.1 wt%, such as down to having substantially no zeotype content different from an MRE framework structure (0.01 wt% or less). In some aspects, the ZSM-48 in the catalyst can have a silica to alumina ratio of 90 : 1 or less, or 75 : 1 or less, such as down to 60 : 1 or possibly still lower.

Optionally but preferably, the dewaxing catalyst can include a binder for the ZSM-48, such as alumina, titania, silica, silica-alumina, zirconia, or a combination thereof, for example alumina and/or titania or silica and/or zirconia and/or titania. The relative amount of ZSM-48 and binder can be any convenient amount. In some aspects where a binder is present, the catalyst can include 1.0 wt% to 85 wt% of a binder and/or can include 15 wt% to 99 wt% of ZSM-48.

In addition to ZSM-48 and optional binder, the dewaxing catalyst preferably also include at least one hydrogenation metal component selected from Pd, Pt, or a combination thereof. In particular embodiments, the dewaxing catalyst comprises Pt. When a hydrogenation metal component is present, the dewaxing catalyst can include 0.1 wt% to 10 wt% of the Pt, Pd, or combination thereof, or 1.0 wt% to 5.0 wt%.

The isomerization/dewaxing reactor may include any suitable type of reactor arranged in any suitable configuration. For example, in some embodiments, the isomerization/dewaxing reactor is a fixed-bed adiabatic reactor or a trickle-bed reactor that is loaded with the ZSM-48-based isomerization/dewaxing catalyst.

The hydrotreated feedstock (or at least a portion thereof, such as the liquid product portion) is exposed to the ZSM-48 based isomerization/dewaxing catalyst under effective isomerization/dewaxing conditions. The skilled person is able to select suitable conditions without undue burden. The effective conditions are typically selected to provide sufficient severity so that substantial dewaxing occurs for the n-paraffins in the hydrotreated feedstock. Depending on the nature of the feedstock, the conditions may be selected as to reducing or minimizing cracking.

In various aspects, the isomerization / dewaxing conditions include a total pressure of 1.4 MPa-g to 14 MPa-g, a WABT of 260°C to 400°C, a treat gas rate of 34 Nm³/m³ to 1700 Nm³/m³, and an LHSV of 1.0 hr⁻¹ to about 8.0 hr⁻¹ (relative to a volume of the dewaxing catalyst). In preferred embodiments, the isomerization / dewaxing conditions include a total pressure of 3.0 MPa-g to 10 MPa-g, a WABT of 300°C to 350°C, a treat gas rate of 50 Nm³/m³ to 200 Nm³/m³, and an LHSV of 1.0 hr⁻¹ to about 3.0 hr⁻¹ (relative to a volume of the dewaxing catalyst).

In various embodiments, the isomerized product exiting the isomerization/dewaxing reactor undergoes a fractionation process. In particular embodiments, the fractionation process involves separating an isomerized product having an IBP of at least 220°C and a FBP of 320°C or less.

In particular embodiments, the isomerized product exiting the isomerization/dewaxing reactor may undergo a step of further hydrogenation, to further reduce the olefin content of the fluid. In embodiments wherein the isomerized product undergoes a fractionation process as described in the above paragraph, the further hydrogenation may be performed prior to or after fractionation.

Whereas the process for the manufacture of the hydrocarbon fluids has been described above with a bio-derived feedstock, it is noted that the hydrocarbon fluids may be made completely or partially from a petroleum-based feed. Indeed, at various stages of the process, petroleum-based feed or fluid may be added. For example, the feed may comprise a bio-derived feedstock blended with petroleum-based feed. Additionally or alternatively, the hydrotreated feedstock may be blended with a petroleum-based having similar properties as the hydrotreated feedstock. Additionally or alternatively, the dewaxed product may be blended, before or after fractionation, with petroleum-based isoparaffinic fluids. In view of the above, the hydrocarbon fluids do not necessarily have a biocarbon content of 100 %.

### Embodiments

Further disclosed are the following embodiments of the hydrocarbon fluids described herein and methods for the manufacture thereof.
Embodiment 1: A hydrocarbon fluid having an isoparaffin content of at least 90 wt%; a flash point of at least 125°C; and a pour point of -65°C or lower.
Embodiment 2: A hydrocarbon fluid having an isoparaffin content of at least 90 wt%; and a degree of branching of at least 1.60, preferably at least 1.70.
Embodiment 3: The hydrocarbon fluid of embodiment 1, having a degree of branching of at least 1.60, preferably at least 1.70.
Embodiment 4: The hydrocarbon fluid of any one of embodiments 1 to 3, having an isoparaffin content of at least 95 wt%.
Embodiment 5: The hydrocarbon fluid of any one of embodiments 1 to 3, having an isoparaffin content of at least 98 wt%.
Embodiment 6: The hydrocarbon fluid of any one of embodiments 1 to 3, having an isoparaffin content of at least 99 wt%.
Embodiment 7: The hydrocarbon fluid of any one of embodiments 1-6, having a total content of isoparaffins, n-paraffins, and cycloparaffins of at least 99 wt%.
Embodiment 8: The hydrocarbon fluid of any one of embodiments 1-6, having a total content of isoparaffins, n-paraffins, and cycloparaffins of at least 99.5 wt%.
Embodiment 9: The hydrocarbon fluid of any one of embodiments 1 to 8, having a n-paraffin content of 1 wt% or less, preferably 0.5 wt% or less.
Embodiment 10: The hydrocarbon fluid of any one of embodiments 1 to 9, having a pour point of -68°C or less.
Embodiment 11: The hydrocarbon fluid of any one of embodiments 1 to 9, having a pour point of -70°C or less.
Embodiment 12: The hydrocarbon fluid of any one of embodiments 1 to 12, having an initial boiling point (IBP) of at least 220°C; a final boiling point (FBP) of 320°C or less; and a boiling range (FBP-IBP) of 60°C or less, preferably from 20°C to 60°C; wherein FBP and IBP are determined according to ASTM D86.
Embodiment 13: The hydrocarbon fluid of any one of embodiments 1 to 12, having a boiling range of 50°C or less, preferably from 20°C to 50°C (ASTM D86).
Embodiment 14: The hydrocarbon fluid of any one of embodiments 1 to 13, having a FBP of 315°C or less (ASTM D86).
Embodiment 15: The hydrocarbon fluid of any one of embodiments 1 to 14, having an IBP of at least 230°C; a T99.5 boiling point of 330°C or less; and a difference between T99.5and IBP of 50°C or less, preferably from 20°C to 50°C; wherein T99.5 and IBP are determined according to ASTM D2887.
Embodiment 16: The hydrocarbon fluid of any one of embodiments 1 to 15, having an aromatic content of less than 1 wt%, preferably less than 0.5 wt%.
Embodiment 17: The hydrocarbon fluid of any one of embodiments 1 to 16, having a biocarbon content of at least 90%.
Embodiment 18: The hydrocarbon fluid of any one of embodiments 1 to 17, having an olefin content of 0.1 wt% or lower.
Embodiment 19: The hydrocarbon fluid of any one of embodiments 1 to 18, having a degree of branching of at least 1.75.
Embodiment 20: The hydrocarbon fluid of any one of embodiments 1 to 19, comprising at least 90 wt% C₁₇ and C₁₈ hydrocarbons, preferably at least 95 wt% C₁₇ and C₁₈ hydrocarbons.
Embodiment 21: The hydrocarbon fluid of any one of embodiments 1 to 20, comprising at least 75 wt% C₁₈ hydrocarbons, preferably at least 85 wt% C₁₈ hydrocarbons.
Embodiment 22: The hydrocarbon fluid of any one of embodiments 1 to 21, having an olefin content, of 0.1 wt% or less.
Embodiment 23: A method for the manufacture of the hydrocarbon fluid such as the hydrocarbon fluid of any one of embodiments 1 to 22, comprising: providing a hydrocarbon feed obtainable via the hydrodeoxygenation of a bio-derived feedstock selected from triglicerides, monoglycerides, diglycerides, fatty acid alkyl esters, free fatty acids, or combinations thereof; contacting said hydrocarbon feed with an isomerization/dewaxing catalyst comprising a 10-member ring, one-dimensional zeotype framework structure and a metal selected from Pt, Pd, or a combination thereof, under effective isomerization/dewaxing conditions, thereby obtaining an isoparaffinic fluid; and optionally, fractionating said isoparaffinic fluid.
Embodiment 24: The method of embodiment 23, wherein said catalyst comprises a ZSM-48 zeolite and Pt.
Embodiment 25: The method of embodiments 23 or 24, wherein said feedstock comprises at least 50 wt% of Cis fatty acid constituents.

### EXAMPLES

The following examples are provided for the purpose of illustrating the present invention and by no means are meant and in no way should be interpreted to limit the scope of the present invention.

A feedstock containing 50 volume % canola oil, 50 volume % n-octadecene, and 500 wppm (parts per million, weight based) of sulfur added in the form of dimethyldisulfide was hydrotreated within a fixed-bed isothermal reactor using a combination of commercially-available Mo and NiMo hydrotreating catalysts. The n-octadecene in the blend is optional and was added to simulate the recycling of hydrotreated canola oil to the reactor to improve heat release control for the hydrotreatment reactor. The hydrotreatment reaction was performed four times, wherein the reaction conditions included a temperature of 320-322°C, a pressure of 5.5 MPag, a treat gas rate of about 1360 Nm³/m³, and an LHSV of 1.0 to 1.75. The hydrotreated feedstock obtained via the four reactions was blended. The blend degree of branching was dewaxed within a fixed-bed isothermal reactor using a ZSM-48-based isomerization/dewaxing catalyst including platinum. The isomerization/dewaxing conditions included a temperature of 329 °C, a pressure of 5.5 MPag, a treat gas rate of 136 Nm³/m³, and an LHSV of 1.25 h⁻¹. The resulting product had a degree of branching of 1.64 and fractionated to obtain inventive Fluid 1 having an IBP 279°C and T99.5 of 316°C as determined via ASTM D2887, and a degree of branching of 1.80 as determined via gas chromatography and NMR. Further properties of Fluid 1 are provided in Table 1. Also provided are properties measured on comparative Fluid 2, which is Isopar^{™} V fluid available from ExxonMobil, comprising mainly isoparaffins and cycloparaffins, and having an IBP of 269°C and a FBP of 310°C as determined according to ASTM D86. From Table 1, it is clear that Fluid 1 has a significantly lower pour point than Fluid 2, while also having a higher flash point.

**Table 1 - Properties of inventive Fluid 1 and comparative Fluid 2**

| **Property** | **Test method** | **Fluid 1** | **Fluid 2** |
|---|---|---|---|
| Pour point (°C) | ASTM D5950 | -75 | -66 |
| Flash point (°C) | Based on ASTM D7094 | 129 | 122 |
| n-paraffins (wt%) | ASTM D2786 | 0.2 | 0 |
| Isoparaffins (wt%) | ASTM D2786 | 99.4 | > 75 |

Any alterations, modifications, and variations will be apparent to those skilled in the art in light of the foregoing description without departing from the spirit or scope of the present disclosure and that when numerical lower limits and numerical upper limits are listed herein, ranges from any lower limit to any upper limit are contemplated.

## Claims

1. A hydrocarbon fluid having:
- an isoparaffin content of at least 90 wt%;
- a flash point of at least 125°C; and
- a pour point of -65°C or lower.

2. A hydrocarbon fluid having:
- an isoparaffin content of at least 90 wt%;
- a boiling range (final boiling point - initial boiling point) ranging from 20°C to 60°C; and
- a degree of branching of at least 1.60, preferably at least 1.70.

3. The hydrocarbon fluid of claim 1, having a degree of branching of at least 1.60, preferably at least 1.70.

4. The hydrocarbon fluid of any one of claims 1 to 3, having an isoparaffin content of at least 95 wt%, preferably at least 98 wt%, most preferably at least 99 wt%.

5. The hydrocarbon fluid of any one of claims 1 ot 4, having a total content of isoparaffins, n-paraffins, and cycloparaffins of at least 99 wt%.

6. The hydrocarbon fluid of any one of claims 1 to 5, having a n-paraffin content of 1 wt% or less, preferably 0.5 wt% or less.

7. The hydrocarbon fluid of any one of claims 1 to 6, having a pour point of -68°C or less.

8. The hydrocarbon fluid of any one of claims 1 to 7, having
- an initial boiling point (IBP) of at least 220°C;
- a final boiling point (FBP) of 320°C or less; and
- a boiling range (FBP-IBP) of 60°C or less;
wherein FBP and IBP are determined according to ASTM D86.

9. The hydrocarbon fluid of claim 8, having a boiling range of 50°C or less, preferably from 20°C to 50°C.

10. The hydrocarbon fluid of any one of claims 1 to 9, having a FBP of 315°C or less.

11. The hydrocarbon fluid of any one of claims 1 to 10, having
- an IBP of at least 230°C;
- a T99.5 boiling point of 330°C or less; and
- a difference between T99.5and IBP of 50°C or less;
wherein T99.5 and IBP are determined according to ASTM D2887.

12. The hydrocarbon fluid of any one of claims 1 to 11, having an aromatic content of less than 1 wt%, preferably less than 0.5 wt%.

13. The hydrocarbon fluid of any one of claims 1 to 12, having a biocarbon content of at least 90%.

14. A method for the manufacture of the hydrocarbon fluid of any one of claims 1 to 13, comprising:
- providing a hydrocarbon feed obtainable via the hydrodeoxygenation of a bio-derived feedstock selected from triglicerides, monoglycerides, diglycerides, fatty acid alkyl esters, free fatty acids, or combinations thereof;
- contacting said hydrocarbon feed with an isomerization/dewaxing catalyst comprising a 10-member ring, one-dimensional zeotype framework structure and a metal selected from Pt, Pd, or a combination thereof, under effective isomerization/dewaxing conditions, thereby obtaining an isoparaffinic fluid; and
- optionally, fractionating said isoparaffinic fluid.

15. The method of claim 14, wherein said catalyst comprises a ZSM-48 zeolite and Pt.
